# EUROPEAN PATENT APPLICATION

(11) **EP 0 886 255 A1**
(43) Date of publication of application: **23.12.1998**
(21) Application number: 98500126.2
(22) Date of filing: 27.05.1998
(51) Int. Cl.: G09B 25/04

(54) **Mockup with improved segmented base**

(30) Priority: 11.06.1997 ES 9701629
(71) Applicant: Domus Kits Construcciones Y Juegos, S.L., 08227 Terrassa (Barcelona) (ES)
(72) Inventor: Gil Rodriguez, José Maria, 08226 Terrassa (Barcelona) (ES)
(74) Representative: Davila Baz, Angel

(57) **Abstract**

MOCKUP comprising a stiff base plate (1) with the plan structure and surroundings drawn on the same, on which a cardboard substructure (3) is placed, provided with indicating lines in order to show the mockup constructor the type of ceramic part (4) to be used in order to cover each sector of the surface, said ceramic parts (4) forming an exterior coating which totally hides the supporting cardboard (3), likewise providing, on the stiff base (1) different appreciably prismatic bodies (2), which may present different degrees of surface inclination depending on the construction to be made, the base (1) being joined by means of bonding or by any other joining means so as to form the supporting surface of the mockup.

## Description

The object of the present invention, as is expressed in the Statement of this Specification, consists of a **"MOCKUP WITH IMPROVED SEGMENTED BASE"**, of the type which represents works of architecture, constructed of ceramic parts.

At the present moment, within the field of mockups, diverse varieties exist which are determined by the nature of the architecture to be reproduced.

The present invention is centred on architectural mockups based on ceramic parts. Their main virtue lies on the great realism adopted by the constructions since they are made with parts which are identical to those used in the real construction.

Said mockups are constructed parting from a stiff base plate on which the cardboard structure is assembled, to be subsequently covered by the actual ceramic elements.

On the other hand, the main disadvantage which this type of mockup presents is based on the complexity involved in its performance, due to which notable preparation and experience is required.

Likewise, said mockups are placed on a flat supporting base which prevents a reliable reproduction of real buildings or constructions with inclined surfaces or with certain sloping.

The novel mockup consist of a flat, stiff base on which different, appreciably prismatic bodies are arranged having diverse shapes and inclinations, so that when they are joined, they may accurately represent any construction with slopes or inclinations of the surrounding terrain.

The plan of the building to be constructed is drawn on said stiff base, as well as the arrangement of the different adjacent bodies which shall form different inclinations.

Next, the cardboard substructure is assembled, according to the arrangement drawn on the stiff base, which corresponds to the walls and roof of the building which shall constitute the support for the actual ceramic elements.

In traditional mockups, the placement of the ceramic parts was carried out without the backing of any supporting structure, due to which, its construction was more difficult.

Said cardboard substructure is constituted as from a cutout board which presents the figure of the construction to be made, marking in turn, the volumes of the mockups, avoiding out-of-squareness of spaces and the lack of alignment of the walls, said problem being common in traditional mockups in which the shape of the same was not defined by its parts, but by the placement and order of the same.

It must be emphasized, that said cutout cardboard parts include on their surface, indicating lines showing the mockup constructor at every moment, the type of part to be used for covering that sector of the surface.

Once the cardboard substructure is assembled, it only suffices to cover them with the appropriate ceramic parts, following the indications marked on the actual surface of the walls to be covered, the cardboard remaining hidden by the ceramic parts.

One of the great advantages of the novel mockup with improved segmented base, consists on the perfect imitation made of the real constructions, including inclinations or slopes of terrain they might present.

They permit an easy, rapid and cost effective construction for beginners, versus traditional mockups, the construction of which, in comparison, was laborious and complicated.

### DESCRIPTION OF THE DRAWINGS

With the object of illustrating what has been indicated up to now, the present Specification is enclosed forming integral part of the same, with a sheet of drawings in which an exemplary embodiment has been represented in a simplified and schematic manner, being only illustrative and non limitative of the practical possibilities of the invention.

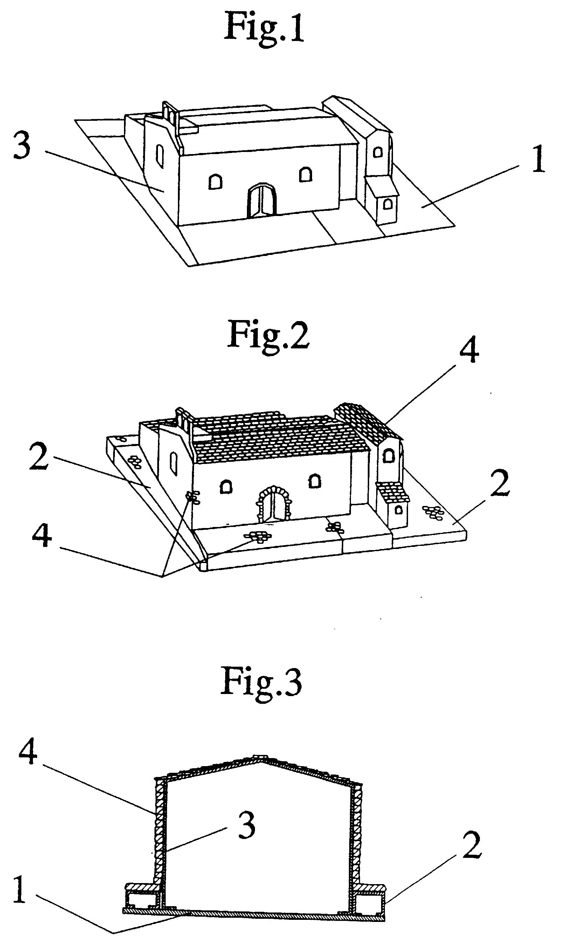

In said drawings, figure 1 corresponds to a perspective view of the assembled cardboard of the novel mockup without the prismatic bodies which shall form the inclination of the terrain.

Figure 2 corresponds to a view of the assembled mockup with the superposed ceramic, on which the different prismatic bodies which form the different slopes of the terrain, can be observed.

Figure 3 corresponds to a cross sectional view in which the ceramic parts are observed to be assembled on the cardboard.

### DESCRIPTION OF A PRACTICAL CASE

The novel **"MOCKUP WITH IMPROVED SEGMENTED BASE"** is constructed parting from a stiff base plate (1) on which the different prismatic bodies (2) are placed, which may present different degrees of surface inclination of the terrain depending on the construction to be performed.

Said prismatic bodies (2) are joined by means of bonding or by any other joining means onto the base (1), on which the plan of the construction to be performed is drawn, as well as the spaces intended for the prismatic bodies (2).

On said base (1), a cardboard substructure (3) is placed, provided with indication lines which show the mockup constructor the type of ceramic part (4) to be used in order to cover that sector of the surface.

Said ceramic parts (4) form an exterior coating which completely hides the supporting cardboard (3), thus accurately imitating the real constructions.

Once the description referred to by the previous Specification has been expounded, it is necessary to insist on the fact that the details of the embodiment of the described idea may be subject to small alterations, always based on the fundamental principles of the idea, that they are essentially those included in the paragraphs of the same.

In effect, the Law of Patents which is in force, establishes as non patentable those changes in shape, dimensions, proportions and materials of an already patented object, thus determining the criteria of the legislator in the sense that once an idea which may lead to a practical reality, capable of being industrialized, has been patented, nobody may use it as support in order to present it as new and of their own, under the pretext of having introduced slight modifications.

After establishing the expressed concept, the note of the claims is herewith drawn up, thus synthesizing the novelties which are desired to be claimed:

## Claims

1. **"MOCKUP WITH IMPROVED SEGMENTED BASE"**, of the type used in the representation of works of architecture with ceramic parts, essentially characterized in that it is constructed as from a stiff base plate (1), with the structure of the plan and surroundings drawn on the same, and on which a cardboard substructure (3) is placed, provided with indication lines to show the mockup constructor the type of ceramic part (4) to be used to cover each sector of the surface of the same, said ceramic parts (4) finally forming an exterior coating which totally hides the supporting cardboard (3), thus accurately imitating the real constructions.

2. **"MOCKUP WITH IMPROVED SEGMENTED BASE"**, according to claim 1, characterized in that, on the stiff base (1) different appreciably prismatic bodies (2) are arranged, which may present different degrees of surface inclination depending on the construction to be made, being joined to the base (1) by means of bonding or by any other joining means to form the base or supporting surface of the mockup, placing on the same the ceramic coating which is appropriate to the nature of the terrain to be imitated.
